# EUROPÄISCHE PATENTSCHRIFT

(11) **EP 1 564 437 B1**
(45) Veröffentlichungstag und Bekanntmachung des Hinweises auf die Patenterteilung: **02.01.2008**
(21) Anmeldenummer: 04100558.8
(22) Anmeldetag: 13.02.2004
(51) Int. Cl.: F16F 15/315, F16D 1/068

(54) **System mit Kurbelwelle und Schwungrad und Verfahren zur Herstellung eines derartigen Systems**
System with crankshaft and flywheel and method of producing such a system
Système avec vilebrequin et volant et procédé de fabrication d'un tel système

(43) Veröffentlichungstag der Anmeldung: 17.08.2005
(73) Patentinhaber: Ford Global Technologies, LLC, A subsidary of Ford Motor Company, Dearborn, MI 48126 (US)
(72) Erfinder: Figura, Michael Georg, 41542, Dormagen (DE); Kluge, Torsten, 51491, Overath (DE)
(74) Vertreter: Drömer, Hans-Carsten

(56) Entgegenhaltungen:
- EP-A- 0 372 663
- US-A- 4 668 116
- US-A- 5 279 183
- US-A- 5 524 739
- PATENT ABSTRACTS OF JAPAN vol. 008, no. 022 (M-272), 31. Januar 1984 (1984-01-31) & JP 58 180855 A (YANMAR DIESEL KK), 22. Oktober 1983 (1983-10-22)

## Beschreibung

Die Erfindung betrifft ein System mit einer Kurbelwelle und einem Schwungrad, insbesondere für die Verwendung in einer Brennkraftmaschine.

Des Weiteren betrifft die Erfindung ein Verfahren zur Herstellung eines derartigen Systems.

Systeme der gattungsbildenden Art werden insbesondere in Brennkraftmaschinen für Kraftfahrzeuge eingebaut. Im weiteren wird kurz auf die einzelnen Bauteile des Systems, nämlich die Kurbelwelle und das Schwungrad, eingegangen, bevor auf das System an sich Bezug genommen wird.

Die Kurbelwelle einer Brennkraftmaschine nimmt die Pleuelstangenkräfte auf, die sich aus den Gaskräften infolge der Kraftstoffverbrennung im Brennraum und den Massenkräften infolge der ungleichförmigen Bewegung der Triebwerksteile zusammensetzen. Dabei wird die oszillierende Hubbewegung insbesondere der Kolben in eine rotierende Drehbewegung der Kurbelwelle transformiert. Die Kurbelwelle überträgt dabei das Drehmoment an den Antrieb und an das Schwungrad. Ein Teil der auf die Kurbelwelle übertragenen Energie wird zum Antrieb von Hilfsaggregaten wie der Ölpumpe und der Lichtmaschine verwendet oder dient dem Antrieb der Nockenwelle und damit der Betätigung des Ventiltriebes.

Die Kurbelwelle besitzt eine bestimmte Drehelastizität und bildet zusammen mit den an sie angelenkten Bauteilen, insbesondere den Pleuelstangen und Kolben, ein schwingungsfähiges System, welches durch die an den Kurbelzapfen angreifenden Gas- und Massenkräften zu Drehschwingungen angeregt werden kann. Bei Anregung im Bereich der Eigenfrequenzen dieses Systems können hohe Drehschwingungsamplituden auftreten, die unter Umständen zum Dauerbruch der Kurbelwelle führen können. Die Drehschwingungen führen zudem zu Drehzahlschwankungen der Kurbelwelle und damit des gesamten Abtriebs.

Um die Drehschwingungen zu dämpfen, können Drehschwingungsdämpfer vorgesehen werden, die üblicherweise am dem Ort, an dem die größten Schwingungsamplituden auftreten, nämlich dem freien Wellenende, angeordnet werden. Durch die Relativbewegung der Masse des Schwingungsdämpfers zur Kurbelwelle wird ein Teil der Drehschwingungsenergie durch Reibungsarbeit abgebaut. Dabei kann der Schwingungsdämpfer beispielsweise als Gummidrehschwingungsdämpfer oder hydraulischer Drehschwingungsdämpfer ausgebildet sein.

Zur Minderung der Drehzahlschwankungen wird die Masse des beschriebenen, schwingungsfähigen Systems durch die Anordnung eines Schwungrades auf der Kurbelwelle erhöht. Infolge der größeren Masse verfügt das System über eine erhöhte Trägheit, weshalb das System insgesamt unempfindlicher gegenüber Drehzahlschwankungen ist und die Drehbewegung der Kurbelwelle gleichförmiger wird. Das Schwungrad speichert Energie und gibt diese bei sinkender Drehzahl an die Kurbelwelle ab. D. h. das als Energiereservoir dienende Schwungrad gibt Energie an die Kurbelwelle ab, sobald es verzögert wird, und verleit der Kurbelwelle und dem gesamten System damit eine gewisse Trägheit, indem es versucht durch Energieabgabe der Verzögerung entgegenzuwirken und die Bewegung aufrecht zu erhalten. Auf diese Weise wirkt das Schwungrad sowohl bei Beschleunigungen als auch bei Verzögerungen für einen ruhigen und runden Lauf der Kurbelwelle und der mit der Kurbelwelle gekoppelten Bauteile.

Günstig wirkt sich das Schwungrad bzw. die hohe Masse des Systems daher auch bei Fehlzündungen und Zündaussetzern aus. Infolge der Trägheit des Systems bleibt die Drehbewegung der Kurbelwelle mehr oder weniger gleichförmig erhalten d. h. die Drehbewegung wird nur geringfügig gestört.

Vorteilhafte Auswirkungen hat das Schwungrad auch bei steigender Belastung. Bei steigender Belastung, beispielsweise beim Befahren einer Ansteigung, fällt die Leistung in der Regel relativ verzögerungsfrei ab. Das Schwungrad wirkt dem Leistungsabfall durch Abgabe von Energie entgegen und gibt dem Fahrer Gelegenheit, geeignete Maßnahmen zu ergreifen.

Das Schwungrad kann auch als Zweimassen-Schwungrad ausgebildet werden und übernimmt dann zusätzlich die Funktion eines Schwingungsdämpfers, welcher die Drehschwingungen zwischen Kupplung und Antrieb mindert. In der Regel ist das Schwungrad auf der einen Seite an der Kurbelwelle befestigt und auf der anderen Seite über die Kupplung mit dem Getriebe verbunden. Bei dem zweigeteilten Schwungrad sind üblicherweise die beiden scheibenförmigen Teile mittels innenliegender Schraubenfedern miteinander verbunden.

Weitere Aufgaben des Schwungrades können darin bestehen, den Anlasserzahnkranz aufzunehmen oder als Signalgeber für den Kurbelwellensensor zu dienen. Nach dem Stand der Technik wird die Stellung der einzelnen Zylinder einer Brennkraftmaschine mittels Kurbelwellensensor, der auch als Kurbelwinkelgeber bezeichnet wird, bestimmt. Der ortsfeste, an der Brennkraftmaschine angeordnete Kurbelwellensensor greift dabei Signale von einem Ring oder Zahnkranz ab, der mit der Kurbelwelle umläuft und vorteilhafterweise am Schwungrad, welches sich durch seinen großen Außendurchmesser auszeichnet, vorgesehen werden kann. Das vom Kurbelwellensensor erzeugte Signal wird von der Motorsteuerung zur Berechnung der Drehzahl und der Winkelstellung der Kurbelwelle benötigt.

Ein Schwungrad im Sinne der vorliegenden Erfindung soll aber ausdrücklich nicht die Aufgaben übernehmen, die üblicherweise einer Kurbelwange zukommen. Dabei wird darauf hingewiesen, daß Brennkraftmaschinen existieren, welche Kurbelwange und Schwungrad in einem Bauteil vereinen, weshalb die vorliegende Erfindung an dieser Stelle von derartigen Ausführungen eines Schwungrades abgegrenzt werden soll.

Nach dem Stand der Technik werden die Kurbelwelle und das Schwungrad als separate selbständige Bauteile gefertigt und dann bei der Montage miteinander verschraubt. Hierzu verfügen beide Bauteile über Flansche und über in den Flanschen angeordnete Butzen bzw. Löcher.

Diese Ausbildung des Systems aus Kurbelwelle und Schwungrad weist zahlreiche Nachteile auf. Zum einen ist ein derartiges System kostenintensiv, insbesondere im Hinblick auf die Herstellungskosten. Die Kontaktflächen der Flansche müssen in einem separaten Schritt feinbearbeitet werden. Zudem müssen Butzen und Löcher in die Flansche eingearbeitet werden. Die Befestigungsmittel, in der Regel Schrauben, sorgen nicht nur für eine Zunahme der Anzahl an Bauteilen, sondern auch für die Zunahme der Bauteil- und damit der Herstellungskosten. Eine hohe Anzahl an Bauteilen führt des weiteren zu hohen Bereitstellungskosten, da sämtliche Bauteile verfügbar gemacht werden müssen d. h. insbesondere verwaltet und gelagert werden müssen.

Zum anderen ist ein derartiges, viele Einzelteile aufweisendes System aber auch relativ komplex und damit störanfällig. Die Montagezeit und damit die Montage- und Herstellungskosten steigen mit zunehmender Anzahl an Bauteilen. Es bieten sich zudem zahlreiche Gelegenheiten, bei der Fertigung der einzelnen Bauteile und bei deren Montage Fehler zu begehen, die sich auf die spätere Funktionstüchtigkeit und Lebensdauer des Systems aus Kurbelwelle und Schwungrad nachteilig auswirken können.

Des Weiteren hat ein solches System, bei dem die Verbindung der Kurbelwelle und des Schwungrades mit Flanschen und Schrauben realisiert wird, einen vergleichsweise hohen Raumbedarf. Der hohe Raumbedarf resultiert zum einen daher, daß die Verbindungsmittel, nämlich Flansch und Schraube, an sich schon sehr voluminös sind und zum anderen die Schrauben für Werkzeuge im Rahmen der Montage zugänglich sein müssen. Der hohe Raumbedarf dieser herkömmlichen Flanschverbindung steht dem Ziel der Konstrukteure, im Motorraum des Kraftfahrzeuges ein möglichst effektives d. h. dichtes Packaging der gesamten Antriebseinheit zu realisieren, entgegen.

Vor diesem Hintergrund ist es die Aufgabe der vorliegenden Erfindung, ein System mit Kurbelwelle und Schwungrad bereitzustellen, mit dem die aus dem Stand der Technik bekannten Nachteile überwunden werden, wobei insbesondere die Herstellungskosten reduziert werden und das System den konstruktiven Anforderungen im Hinblick auf einen möglichst geringen Raumbedarf entsprechen soll.

Eine weitere Teilaufgabe der vorliegenden Erfindung ist es, ein Verfahren zur Herstellung eines derartigen Systems aufzuzeigen.

Gelöst wird die erste Teilaufgabe durch ein System mit Kurbelwelle und Schwungrad, das dadurch gekennzeichnet ist, daß die Kurbelwelle mit dem Schwungrad einteilig ausgebildet ist, so daß das System ein monolithisches Bauteil bildet.

Das vorgeschlagene System zeichnet sich dadurch aus, daß eine unlösbare Verbindung zwischen Kurbelwelle und Schwungrad vorgesehen wird. Diese unlösbare Verbindung wird dadurch realisiert, daß beide Bauteile aus einem Stück gefertigt werden. Dieses Lösungsprinzip unterscheidet das erfindungsgemäße System von dem herkömmlichen System, bei welchem eine kraftschlüssige und lösbare Verbindung mittels Schrauben zwischen Kurbelwelle und Schwungrad vorgesehen wird.

Das erfindungsgemäße System ermöglicht ein dichtes Packaging der Antriebseinheit im Motorraum des Kraftfahrzeuges. Die nach dem Stand der Technik üblicherweise verwendeten, nach außen hervorstehenden Verbindungsmittel zur Ausbildung einer kraftschlüssigen Verbindung, nämlich Flansche und Schrauben, entfallen. Damit entfällt auch die konstruktive Anforderung, daß die - nunmehr nicht mehr vorhandenen - Verbindungsmittel im Hinblick auf die Montage einen Zugang für Werkzeuge aufweisen müssen. Dadurch wird die erste der Erfindung zugrunde liegende Teilaufgabe gelöst, nämlich ein System bereitzustellen, welches den konstruktiven Anforderungen im Hinblick auf einen möglichst geringen Raumbedarf entspricht und ein effektives Packaging zuläßt.

Mittels des erfindungsgemäßen Systems kann zudem die Anzahl der Systembauteile nennenswert reduziert werden, wobei das gesamte System auf ein einzelnes Bauteil zurückgeführt bzw. reduziert wird. Das vorgeschlagene, vergleichsweise wenige Einzelteile aufweisende System ist naturgemäß weniger komplex und damit weniger störanfällig als herkömmliche Systeme. Dadurch, daß weniger Teile zu fertigen und zu verbinden sind, können sich prinzipbedingt weniger Montage- und/oder Herstellungsfehler einschleichen, was sich auf die Funktionstüchtigkeit und Lebensdauer des Systems vorteilhaft auswirkt.

Die Notwendigkeit, die Verbindungsmittel zu bearbeiten, insbesondere die Bearbeitung der Kontaktflächen der Flansche und die Einarbeitung von Butzen und Löchern in die Flansche, entfällt zusammen mit den Verbindungsmitteln selbst, so daß die reduzierte Anzahl an Bauteilen nicht nur die Montagezeit und damit die Montagekosten, sondern die Herstellungskosten an sich reduziert. Darüber hinaus müssen weniger Einzelteile bevorratet, verwaltet und für den Herstellungs- bzw. Montageprozeß bereitgestellt werden.

Hierdurch wird die zweite der Erfindung zugrunde liegende Teilaufgabe gelöst, nämlich ein System aus Kurbelwelle und Schwungrad bereitzustellen, welches eine Reduzierung der Herstellungskosten ermöglicht.

Das erfindungsgemäße Prinzip, nach welchem das System monolithisch ausgebildet wird, führt auch zu einer Gewichtsreduzierung des gesamten Systems. Zwar steht eine Gewichtsreduzierung, die grundsätzlich angestrebt wird, hier nicht im Mittelpunkt der konstruktiven Bemühungen, da durch das Anordnen des Schwungrades auf der Kurbelwelle gerade die Masse und damit die Trägheit des Systems gesteigert werden soll. Zu berücksichtigen ist aber, daß man bei der Steigerung der Trägheit bemüht ist, möglichst viel Masse auf einem möglichst großen Durchmesser anzuordnen und die Verbindungsmittel nach dem Stand der Technik in der Nähe der Systemachse und damit auf einem kleinen Durchmesser angeordnet werden, so daß deren Massen nur unwesentlich zu einer Steigerung der Trägheit beitragen.

Das erfindungsgemäße System trägt auch dem Umstand Rechnung, daß es sich bei der Verbindung zwischen Kurbelwelle und Schwungrad üblicherweise um eine Verbindung handelt, die während der Lebensdauer des Kraftfahrzeuges bzw. des Systems nicht mehr gelöst wird. Weder das Schwungrad noch die Kurbelwelle sind Verschleißteile, die ausgetauscht oder erneuert werden müssen. Die Verbindung wird ein einziges Mal bei der Montage während der Fertigung des Fahrzeuges hergestellt. Daher besteht kein Anlaß, diese Verbindung - wie nach dem Stand der Technik vorgesehen - als kraftschlüssige, lösbare Verbindung auszubilden, zumal diese Verbindungsart - wie oben ausgeführt - zahlreiche Nachteile aufweist und keinen erkennbaren Nutzen mit sich bringt.

Vorteilhaft sind bei monolithisch ausgebildeten Systemen Ausführungsformen, bei denen das System einteilig als gegossenes Bauteil ausgebildet ist.

Vorteilhaft sind bei monolithisch ausgebildeten Systemen aber auch Ausführungsformen, bei denen das System einteilig als geschmiedetes Bauteil ausgebildet ist.

Grundsätzlich hat das Gießen und Schmieden des Systems nur beispielhaften Charakter, weshalb alle denkbaren Verfahren für die Herstellung in Frage kommen, mit denen ebenfalls ein monolithisches System ausgebildet werden kann.

Die zweite Teilaufgabe wird gelöst durch ein Verfahren zur Herstellung eines Systems mit Kurbelwelle und Schwungrad, das dadurch gekennzeichnet ist, daß
■ die Kurbelwelle mit dem Schwungrad einteilig d. h. als monolithisches Bauteil ausgebildet wird.

Das bereits für das erfindungsgemäße System Gesagte hat ebenfalls für das erfindungsgemäße Verfahren Gültigkeit. Darüber hinaus weist das erfindungsgemäße Herstellungsverfahren im Vergleich zu alternativen Verfahren zur Ausbildung eines derartigen Systems grundsätzlich den Vorteil auf, daß weniger Werkzeuge zur Durchführung des Verfahrens erforderlich sind, da das System einteilig ausgebildet wird.

Vorteilhaft sind Ausführungsformen des Verfahrens, bei denen das System gegossen und damit als monolithisches Bauteil ausgebildet wird.

In der Praxis werden bereits gegossene Kurbelwellen, insbesondere bei Ottomotoren, immer häufiger eingesetzt, wobei vorzugsweise Sphäroguß oder Temperguß verwendet wird. Eine Modifikation der Gießformen d. h. eine Erweiterung dieser Formen um eine dem Schwungrad entsprechende Form ermöglicht dann die erfindungsgemäße Ausbildung des Systems als gegossenes, monolithisches Bauteil.

Vorteilhaft sind aber auch Ausführungsformen des Verfahrens, bei denen das System als monolithisches Bauteil ausgebildet wird, indem es geschmiedet wird.

Schnellaufende, kleine Motoren hoher Leistung haben nach dem Stand der Technik im allgemeinen eine im Gesenk geschmiedete Kurbelwelle, was schon bei der Formgebung Berücksichtigung findet. Erfindungsgemäße Systeme, bei denen die Kurbelwelle und das Schwungrad einteilig ausgeführt werden, können in einfacher Weise dadurch hergestellt werden, daß bereits vorhandene Gesenke in der Art modifiziert werden, daß das Schwungrad zusammen mit der Kurbelwelle in einem Arbeitsgang im Gesenk geschmiedet wird.

Die Wellen größerer Motoren werden üblicherweise freiformgeschmiedet. Auch bei dieser Vorgehensweise kann das Schwungrad im Rahmen des Freiformschmiedevorganges berücksichtigt d. h. mitgefertigt werden. Als Werkstoffe kommen in der Regel Vergütungsstähle zum Einsatz.

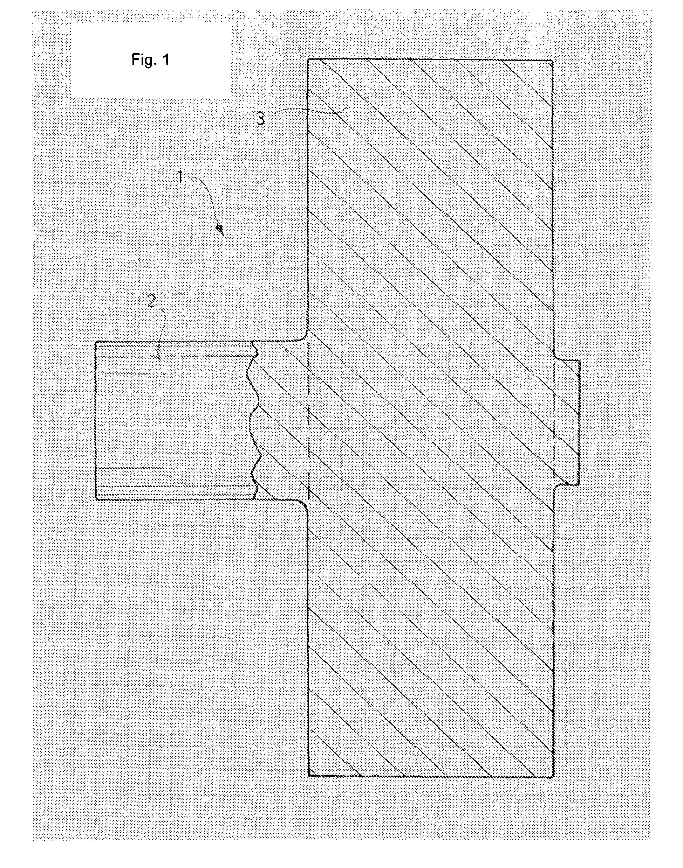

Im folgenden wird die Erfindung anhand eines Ausführungsbeispieles gemäß Figur 1 näher beschrieben. Hierbei zeigt:
- Fig. 1: schematisch und im Querschnitt eine Ausführungsform des Systems.

Figur 1 zeigt schematisch eine Ausführungsform des Systems 1 im Querschnitt.

Bei der dargestellten Ausführungsform ist das System 1 nicht modular aufgebaut, sondern einteilig als monolithisches Bauteil ausgebildet, wobei das Schwungrad 3 und die Kurbelwelle 2 als Gussteil gefertigt bzw. geschmiedet sind.

### Bezugszeichen

- 1: System
- 2: Kurbelwelle
- 3: Schwungrad

## Patentansprüche

1. System (1) mit Kurbelwelle (2) und Schwungrad (3), insbesondere für die Verwendung in einer Brennkraftmaschine,
**dadurch gekennzeichnet, daß**
die Kurbelwelle (2) mit dem Schwungrad (3) einteilig ausgebildet ist, so daß das System (1) ein monolithisches Bauteil bildet.

2. Monolithisch ausgebildetes System (1) nach Anspruch 1,
**dadurch gekennzeichnet, daß**
das System (1) einteilig als gegossenes Bauteil ausgebildet ist.

3. Monolithisch ausgebildetes System (1) nach Anspruch 1,
**dadurch gekennzeichnet, daß**
das System (1) einteilig als geschmiedetes Bauteil ausgebildet ist.

4. Verfahren zur Herstellung eines Systems (1) mit Kurbelwelle (2) und Schwungrad (3), insbesondere für die Verwendung in einer Brennkraftmaschine,
**dadurch gekennzeichnet, daß**
■ die Kurbelwelle (2) mit dem Schwungrad (3) einteilig d. h. als monolithisches Bauteil ausgebildet wird.

5. Verfahren nach Anspruch 4,
**dadurch gekennzeichnet, daß**
das System (1) gegossen und damit als monolithisches Bauteil ausgebildet wird.

6. Verfahren nach Anspruch 4,
**dadurch gekennzeichnet, daß**
das System (1) geschmiedet und damit als monolithisches Bauteil ausgebildet wird.

## Claims

1. System (1) comprising a crankshaft (2) and a flywheel (3), in particular for use in an internal combustion engine, **characterized in that** the crankshaft (2) is produced in one piece with the flywheel (3), so that the system (1) forms a monolithic component.

2. Monolithically formed system (1) according to Claim 1, **characterized in that** the system (1) is produced in one piece as a cast component.

3. Monolithically formed system (1) according to Claim 1, **characterized in that** the system (1) is produced in one piece as a forged component.

4. Method for producing a system (1) comprising a crankshaft (2) and a flywheel (3), in particular for use in an internal combustion engine, **characterized in that** the crankshaft (2) is produced in one piece with the flywheel (3), that is to say as a monolithic component.

5. Method according to Claim 4, **characterized in that** the system (1) is cast and is consequently produced as a monolithic component.

6. Method according to Claim 4, **characterized in that** the system (1) is forged and is consequently produced as a monolithic component.

## Revendications

1. Système (1) avec vilebrequin (2) et volant (3), notamment destiné à être utilisé dans un moteur combustion interne,
**caractérisé en ce que** le vilebrequin (2) est conçu en monobloc avec le volant (3) de sorte que le système (1) forme un élément monolithique.

2. Système (1) conçu sous forme monolithique selon la revendication 1, **caractérisé en ce que** le système (1) est conçu en monobloc, sous la forme d'un élément moulé.

3. Système (1) conçu sous forme monolithique selon la revendication 1, **caractérisé en ce que** le système (1) est conçu en monobloc, sous la forme d'un élément forgé.

4. Procédé de fabrication d'un système (1) avec vilebrequin (2) et volant (3), notamment destiné à être utilisé dans un moteur à combustion interne, **caractérisé en ce que** le vilebrequin (2) est conçu en monobloc avec le volant (3), c'est-à-dire sous la forme d'un élément monolithique.

5. Procédé selon la revendication 4, **caractérisé en ce qu'**on coule le système (1) et on le conçoit donc sous la forme d'un élément monolithique.

6. Procédé selon la revendication 4, **caractérisé en ce qu'**on forge le système et on le conçoit donc sous la forme d'un élément monolithique.
